Europäisches Patentamt

European Patent Office

Office européen des brevets

(19)

(11) Numéro de publication : **0 406 046 B1**

# FASCICULE DE BREVET EUROPEEN

(12)

(45) Date de publication du fascicule du brevet :
01.12.93 Bulletin 93/48

(21) Numéro de dépôt : **90401638.3**

(22) Date de dépôt : **13.06.90**

(51) Int. Cl.⁵ : **F16K 3/08**

(54) **Disques céramiques pour robinet et robinet équipé de tels disques.**

(30) Priorité : **22.06.89 FR 8908313**

(43) Date de publication de la demande :
**02.01.91 Bulletin 91/01**

(45) Mention de la délivrance du brevet :
**01.12.93 Bulletin 93/48**

(84) Etats contractants désignés :
**AT BE CH DE DK ES FR GB GR IT LI LU NL SE**

(56) Documents cités :
**EP-A- 0 071 066**
**BE-A- 819 712**
**DE-B- 1 109 472**
**DE-U- 8 508 269**

(73) Titulaire : **C.I.C.E. S.A.**
**Les Miroirs 18, avenue d'Alsace**
**F-92400 Courbevoie (FR)**

(72) Inventeur : **Clerc, Daniel**
**41 allée de Stalingrad**
**F-94170 Le Perreux (FR)**

(74) Mandataire : **Rinuy, Santarelli**
**14, avenue de la Grande Armée**
**F-75017 Paris (FR)**

EP 0 406 046 B1

Jouve, 18, rue Saint-Denis, 75001 PARIS

## Description

L'invention décrit des améliorations apportées à des dispositifs connus sous le nom de robinets demi-tour et plus particulièrement aux disques céramiques destinés à la fabrication de tels dispositifs.

Les robinets sont des dispositifs ou appareils destinés à réguler le débit d'un liquide, généralement de l'eau. Leurs fonctions principales sont :
- d'arrêter totalement le passage du liquide,
- d'ouvrir progressivement l'écoulement du liquide, c'est-à-dire de réguler le débit depuis une position minimum, l'arrêt, jusqu'à une position maximum, dite "pleine ouverture".

De nombreux dispositifs ont été développés dans ce but. On peut les classer en deux familles principales, les robinets dits à "clapet mobile" et ceux à "disques céramiques".

Les robinets dits à "clapet mobile" ont une étanchéité qui est obtenue en venant plaquer un clapet caoutchouc sur un siège fixe et rigide dont il épouse la forme. Dans ce cas, le débit est régulé en écartant progressivement à l'aide d'un axe de manoeuvre le clapet du siège de façon à augmenter la section de passage du fluide.

Les inconvénients liés au principe de ce type de robinet sont nombreux :
- pour une position donnée de l'axe de manoeuvre, variation du débit en fonction de la température,
- sensibilité insuffisante du réglage du débit,
- risque de défaut d'étanchéité en raison du vieillissement prématuré du clapet caoutchouc,
- imprécision de la position de fermeture,
- etc...

Les robinets à "disques céramiques" permettent de pallier certains inconvénients des robinets dits à "clapet mobile", notamment :
- variation du débit en fonction de la température du liquide,
- défaut d'étanchéité en raison du vieillissement prématuré du clapet caoutchouc,
- imprécision de la position de fermeture.

Leur principe repose sur l'utilisation de deux disques en alumine ou autres matériaux céramiques.

Chaque disque comprend une ou plusieurs lumières ainsi qu'une face très plane (défaut de forme égal ou inférieur à deux franges d'interférence - raie d'émission de l'hélium soit 0,589 μm) et finement polie (coefficient de rugosité Ra égal ou inférieur à 0,25 μm).

Suivant le type considéré de robinet à "disques céramiques", les lumières peuvent être similaires ou différentes d'un disque à l'autre. Elles sont chacune situées sur un secteur de disque.

Un disque est fixe, l'autre rotatif. Ils sont superposés l'un à l'autre, face plane contre face plane.

La planéité des disques céramiques ainsi que leur faible rugosité suffisent pour que le simple contact de leurs surfaces assure l'étanchéité du robinet.

L'un des disques, généralement le disque fixe, est raccordé sur sa face arrière non polie à l'extrémité de la ligne d'arrivée du liquide par l'intermédiaire d'un joint qui assure une étanchéité statique du robinet.

L'autre disque, mobile, est animé d'un mouvement de rotation transmis par un axe relié à une poignée de manoeuvre.

Le déplacement angulaire du disque mobile relativement au disque fixe met progressivement en superposition les lumières en créant un (ou des) passage(s) dont la section régule le débit du liquide depuis une valeur nulle jusqu'à un débit maximal.

De nombreux brevets décrivent de tels robinets, dont par exemple EP-0.055.181, EP-0.296.945 et DE-2.805.038.

Dans la plupart des robinets décrits ou existant sur le marché, chaque disque comporte une ou plusieurs lumière(s) dont la géométrie est déterminée par un ou deux segment(s) rectiligne(s) parallèle(s) à des diamètres du disque et un ou deux arc(s) de cercle concentriques à la périphérie du disque.

Suivant le type de robinet, le disque fixe et le disque mobile peuvent être identiques ou différents en ce qui concerne le nombre et la forme des lumières.

Les disques comprenant deux lumières ont généralement des lumières identiques, sur le disque fixe et sur le disque mobile, en forme de quart de cercle, diamétralement opposées l'une à l'autre.

L'ouverture maximale d'un robinet équipé de ces disques est obtenue par une rotation de 90° du disque mobile par rapport au disque fixe. Pour cette raison, ce type de robinet est appelé "quart de tour".

Certains disques comprenant une seule lumière ont cette lumière identique sur le disque fixe et sur le disque mobile, en forme de demi-cercle.

L'ouverture maximale du robinet équipé de ces disques est obtenue par une rotation de 180° du disque mobile par rapport au disque fixe. Pour cette raison, ce type de robinet est appelé "demi-tour".

D'autres disques comprenant une seule lumière, ont cette lumière différente sur chacun des deux disques, fixe et mobile. Le disque fixe comprend généralement (voir par exemple le document EP-0.296.945 précité, une lumière en forme de virgule, sur un angle supérieur à 180°, mais inférieur à 270°. Le disque mobile comporte une lumière sur un angle proche mais inférieur à 90°. L'ouverture maximale du robinet équipé de ces disques est obtenue par une rotation voisine de 270° du disque mobile par rapport au disque fixe. Pour cette raison, ce type de robinet est appelé "trois quarts de tour".

Ces trois types de robinet à "disques céramiques" ont des avantages sur leurs homologues à clapet. Néanmoins, ils présentent différents inconvénients :

- défaut de linéarité du débit pour les "quart de tour" et "demi-tour",
- imprécision de réglage à l'ouverture et à la fermeture de l'écoulement du liquide pour les "quart de tour" et les "demi-tour",
- bruit élevé lié à certaines positions de fonctionnement des "quart" et "demi-tour",
- débit insuffisant sur les "trois quarts de tour",
- déséquilibre général pour les "demi" et "trois quarts de tour" du fait de la dissymétrie de l'écoulement du liquide par rapport à l'axe des disques,
- coup de bélier élevé pour les "quart" et "demi-tour",
- ouverture totale difficile à réaliser en un seul mouvement pour les "trois quarts de tour".

L'invention vise à pallier les inconvénients précités en assurant notamment :

- une amélioration de la linéarité du débit du liquide à l'ouverture et à la fermeture par rapport aux robinets "demi-tour" et "quart de tour",
- une diminution du déséquilibre constaté sur les robinets "demi" et "trois quarts de tour",
- une augmentation du débit constaté sur les robinets "trois quarts de tour".

L'invention porte ainsi sur des disques pour robinet à liquide, du type "demi-tour", constitué d'un corps creux dans lequel sont interposés entre l'entrée et la sortie du liquide, deux disques en céramique face plane contre face plane.

Dans la pratique, l'un des disques est fixe, et situé vers l'entrée du liquide, l'autre est mobile. Ce dernier est entraîné en rotation par un axe raccordé à une poignée de manoeuvre.

L'invention repose sur le principe de l'écoulement simultané d'un liquide au travers de deux lumières diamétralement opposées ménagées sur chacun de deux disques identiques généralement choisis en céramique.

A pleine ouverture du robinet, le liquide s'écoule au travers des deux passages constitués par la superposition des lumières des deux disques sur un angle proche mais inférieur à 360°.

La linéarité de l'augmentation du débit est liée à la progression régulière de la surface des ouvertures au fur et à mesure de la rotation du robinet jusqu'à un angle proche mais inférieur à 180°.

L'invention a donc pour objet un disque pour robinet à deux disques du type "demi-tour", les deux disques étant superposés et en contact pour régler le débit d'un liquide, caractérisé en ce qu'il comporte une première et une deuxième lumière, ces deux lumières étant situées de part et d'autre d'un diamètre du disque, la première lumière étant située dans la partie centrale du disque et la deuxième lumière étant située en périphérie du disque de façon qu'en position de fermeture du robinet, les lumières de chaque disque ne se superposent pas et qu'en position d'ouverture maximale du robinet les premières lumières et les deuxièmes lumières se superposent respectivement.

En d'autres termes, dans chaque disque, le symétrique de chaque lumière par rapport audit diamètre est disjoint de l'autre lumière.

Selon des dispositions préférées, éventuellement combinées :

- la première lumière a la forme d'une demi-lune,
- la première lumière est inscrite dans un secteur inférieur à 180°,
- la deuxième lumière a la forme d'une portion de couronne concentrique au disque,
- ladite portion de couronne est inscrite dans un secteur d'angle légèrement inférieur à 180°,
- la première et la deuxième lumière étant limitées par des arcs de cercle et/ou des lignes droites, des congés de raccordement sont prévus aux intersections de ces arcs de cercle et/ou de ces lignes droites,
- le rayon des congés de la première lumière est inférieur au diamètre de l'arc de cercle délimitant cette première lumière divisé par 24,
- le rayon des congés de la deuxième lumière est inférieur à la différence des diamètres des arcs de cercle délimitant la seconde lumière divisée par 24,
- les première et seconde lumières étant délimitées par des arcs de cercle et des lignes droites, la deuxième lumière est limitée angulairement par des portions de rayons du disque proches du diamètre prédéterminé,
- la fermeture se fait d'abord par absence de recouvrement des premières lumières, puis par absence de recouvrement des deuxièmes lumières,
- le début ou la fin de la superposition des deuxièmes lumières présente un passage au liquide, dont la forme est assimilable à un trapèze,
- la première lumière ayant la forme d'une demi-lune déterminée par un segment proche du diamètre prédéterminé et un arc de cercle, et la seconde lumière ayant la forme d'une portion de couronne concentrique au disque limitée angulairement par des portions de rayon l'angle $\alpha$ séparant le diamètre du rayon du disque portant l'une des portions de rayon de la deuxième lumière, est inférieur à l'angle $\beta$ séparant le diamètre d'un rayon passant par l'intersection entre la ligne droite portant le segment et l'arc de cercle limitant la première lumière,
- les lumières comportent des parties qui s'évasent en direction des faces des disques qui ne sont pas en contact,
- il est réalisé en céramique.

L'invention a également pour objet une paire de tels disques accolés l'un à l'autre, et un robinet utilisant des disques tels que deux définis ci-dessus.

L'invention sera mieux comprise et d'autres avantages apparaîtront, à la lecture de la description qui va suivre, donnée à titre d'exemple non limitatif, accompagnée des dessins annexés sur lesquels :

- la figure 1 est une vue de dessus d'un disque selon l'invention,
- la figure 2 est une vue en coupe axiale du disque représenté à la figure 1, selon la ligne II-II,
- la figure 3 représente la superposition de deux disques selon l'invention dans un robinet en position d'ouverture totale,
- la figure 4 représente la superposition de deux disques selon l'invention dans un robinet en position de fermeture totale.

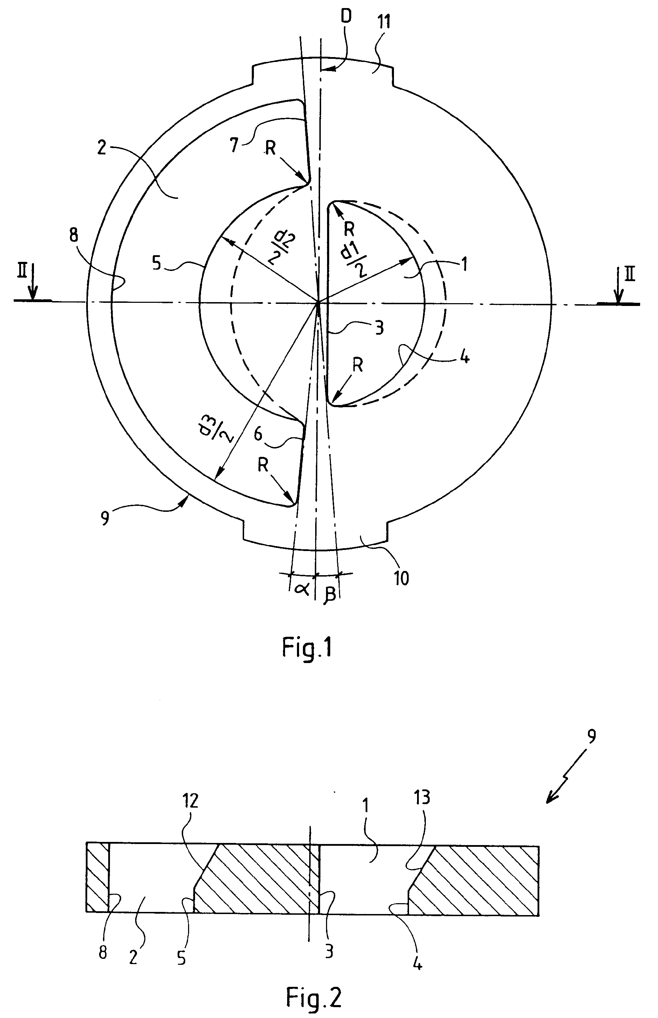

Les figures 1 et 2 sont illustratives d'un disque selon l'invention comportant des lumières particulièrement avantageuses.

L'invention concerne un robinet du type "demi-tour", constitué de deux disques en céramique, généralement en alumine. Ces deux disques sont identiques.

Dans le cas des robinets "demi-tour" connus dans l'état de l'art, chaque disque comporte une lumière constituée par une droite parallèle et proche d'un diamètre, et par un arc de cercle concentrique au disque. Ceci fait que :

- lors de la fermeture du robinet, le passage résiduel permis au liquide par la superposition des lumières a la forme d'un triangle dont le sommet s'éloigne rapidement du centre des disques, ce qui ne permet pas une linéarité du débit en fonction de l'angle de rotation de l'axe de manoeuvre,
- lors de l'ouverture du robinet, le passage permis au liquide par la superposition des ouvertures est situé dans un secteur inférieur à 180°.

Ceci crée un déséquilibre de pression à l'intérieur du robinet donc une usure prématurée et un écoulement bruyant du liquide.

Par contre, les disques selon l'invention comportent deux lumières différentes qui couvrent chacune un angle proche mais inférieur à 180°.

Ces lumières ou ouvertures sont concentriques au disque. Leurs implantations sont diamétralement opposées et s'étendent angulairement sur deux secteurs dont la somme représente un angle proche mais inférieur à 360°.

En d'autres termes, l'invention concerne des disques comportant deux lumières 1 et 2 s'étendant conjointement sur un secteur proche mais inférieur à 360°, pour réaliser un robinet à "demi-tour", ces lumières ayant des formes appropriées, permettant d'obtenir une progression linéaire du débit au fur et à mesure de l'ouverture du robinet.

Ainsi que cela ressort de la figure 1, chaque disque comporte deux lumières 1 et 2 situées de part et d'autre d'un diamètre principal D. La première lumière 1 est limitée par un segment rectiligne 3 parallèle et proche de D et par un arc de cercle 4 concentrique au disque et de diamètre d1. Elle a la forme d'une demi-lune.

La seconde lumière 2 est située du côté opposé à la première par rapport au diamètre D. Elle est délimitée par un arc de cercle 5 concentrique au disque et de diamètre d2 tel que d2 > d1, deux portions de rayon 6 et 7 du disque proches du diamètre D et le plus possible éloignées angulairement l'une de l'autre mais tel que l'angle formé par ces deux portions de rayon 6 et 7 du disque soit plus petit mais proche de 180°, un second arc de cercle 8 concentrique au disque et de diamètre d3 tel que d3 > d2 et d3 le plus grand possible par rapport au diamètre extérieur du disque repéré dans son ensemble 9. Les lignes 3 et 4 d'une part, 5, 6, 7 et 8 d'autre part, peuvent se raccorder à un angle vif ou par des rayons R qui ne sont pas obligatoirement égaux entre eux.

On notera que, de façon générale, le symétrique de chaque lumière par rapport au diamètre de référence D est disjoint de l'autre lumière.

A plein débit, les deux disques 9 et 9' (un indice "prime" est appliqué aux chiffres de référence du second disque) sont placés de façon à obtenir la superposition totale des lumières 1 et 2 de chaque disque (1 sur 1' et 2 sur 2') ; le liquide sort de part et d'autre du diamètre D, ce qui donne un bon équilibre du robinet.

Au fur et à mesure de la rotation des disques par rapport à l'autre, les passages résiduels restent situés de part et d'autre du disque D et maintiennent l'équilibre du robinet.

Les lumières sont conçues de façon à ce que la fermeture se fasse d'abord par absence de recouvrement des lumières centrales 1, puis par absence de recouvrement des lumières périphériques 2. A la fermeture, le fait que les lumières 2 soient limitées entre autres par des portions de rayons du disque 6 et 7, a pour conséquence, que la forme des passages d'eau résiduels est pratiquement trapézoïdale. La forme trapézoïdale des passages dont la hauteur est constante et égale à (d3-d2)/2 permet une variation quasi linéaire de leur section en fonction de l'angle de rotation des disques l'un par rapport à l'autre.

Selon la figure 1, l'angle α est le petit angle séparant le diamètre D du rayon du disque portant la portion 6. L'angle β est le petit angle séparant le diamètre D du rayon passant par l'intersection de la droite porteuse du segment de droite 3 et du prolongement de l'arc de cercle 4. Ces petits angles α et β se retrouvent par symétrie sur le côté opposé du disque.

La linéarité du débit à l'ouverture et à la fermeture sera satisfaite si α < β.

L'influence des rayons R est faible si ils ont été choisis petits par rapport aux dimensions des lumières suivantes :

$$R < \frac{d1}{24} \text{ pour la première lumière 1 et}$$

$$R < \frac{d3 - d2}{24} \text{ pour la première lumière 2.}$$

Les disques peuvent être pourvus de portions telles que 10 et 11 (ici des saillies radiales) permettant leur dégauchissage et l'entraînement en rotation par une pièce adaptée (ou l'immobilisation par rapport au corps du robinet comme c'est le cas généralement pour l'un des deux disques).

Des surfaces évasées 12 et 13, rayons ou pans coupés (chanfreins), peuvent être prévues de façon à améliorer le passage du fluide à l'amont et à l'aval de la zone de contact des deux disques. Ces évasements sont donc orientés à l'opposé des faces en contact.

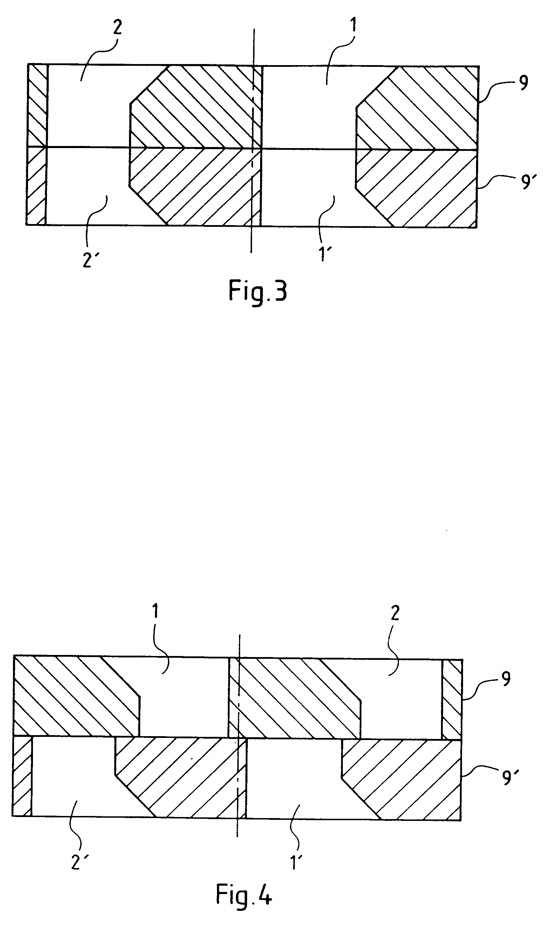

La figure 3 représente la superposition de deux disques selon l'invention, dans un robinet en position d'ouverture totale. Par cette figure on voit que les lumières identiques sont en correspondance et permettent le passage du liquide de part et d'autres du diamètre D.

La figure 4 représente la superposition de deux disques selon l'invention dans un robinet en position de fermeture totale. Par cette figure, on voit le recouvrement de chaque lumière de chaque lumière par une partie pleine du disque vis-à-vis et par conséquent un arrêt total du passage du liquide.

Il entre dans le cadre de la présente invention de faire varier la surface des lumières 1 et 2 par modification des diamètres d1, d2 et d3 en fonction des conditions d'utilisation et du résultat recherché pour augmenter la surface d'une lumière aux dépens de l'autre. Le montage dans le robinet des disques selon l'invention est classique en soi et ne pose pas de problème particulier à l'homme de l'art.

## Revendications

1. Disque pour robinet à deux disques de type demi-tour, les deux disques étant superposés et en contact pour régler le débit d'un liquide, caractérisé en ce qu'il comporte une première et une deuxième lumière, les deux lumières étant situées de part et d'autre d'un diamètre prédéterminé (D) du disque, la première lumière (1) étant située dans la partie centrale du disque et la deuxième lumière (2) étant située en périphérie du disque de façon qu'en position de fermeture du robinet les lumières de chaque disque soient disjointes des lumières de l'autre disque et qu'en position d'ouverture maximale du robinet les premières lumières et deuxièmes lumières se superposent respectivement.

2. Disque selon la revendication 1, caractérisé en ce que la première lumière (1) a la forme d'une demi-lune.

3. Disque selon la revendication 2, caractérisé en ce que la première lumière est inscrite dans un secteur inférieur à 180°.

4. Disque selon l'une quelconque des revendications 1 à 3, caractérisé en ce que la deuxième lumière (2) a la forme d'une portion de couronne concentrique au disque.

5. Disque selon la revendication 4, caractérisé en ce que ladite portion de couronne est inscrite dans un secteur d'angle légèrement inférieur à 180°.

6. Disque selon l'une quelconque des revendications 1 à 5, caractérisé en ce que la première et la deuxième lumière étant limitées par des arcs de cercle (4, 5, 8) et/ou des lignes droites (3, 6, 7), des congés de raccordement sont prévus aux intersections de ces arcs de cercle et/ou de ces lignes droites.

7. Disque selon la revendication 6, caractérisé en ce que le rayon des congés de la première lumière (1) est inférieur au diamètre de l'arc de cercle (4) délimitant cette première lumière divisé par 24.

8. Disque selon la revendication 6 ou la revendication 7, caractérisé en ce que le rayon des congés de la deuxième lumière (2) est inférieur à la différence des diamètres des arcs de cercle (5, 8) délimitant la seconde lumière (2) divisée par 24.

9. Disque selon l'une quelconque des revendications 1 à 8, caractérisé en ce que, les première et seconde lumières étant délimitées par des arcs de cercle et des lignes droites, la deuxième lumière (2) est limitée angulairement par des portions de rayons (6, 7) du disque proches du diamètre prédéterminé (D).

10. Disque selon l'une quelconque des revendications précédentes, caractérisé en ce que la fermeture se fait d'abord par absence de recouvrement des premières lumières (1) puis par absence de recouvrement des deuxièmes lumières (2).

11. Disque selon la revendication 9, caractérisé en ce que le début ou la fin de la superposition des deuxièmes lumières (2) présente un passage au liquide, dont la forme est assimilable à un trapèze.

12. Disque selon l'une quelconque des revendications 1 à 11, caractérisé en ce que la première lumière (1, 1') ayant la forme d'une demi-lune déterminée par un segment (3) proche du diamètre prédéterminé (D) et un arc de cercle (4), et la seconde lumière (2, 2') ayant la forme d'une portion de couronne concentrique au disque limitée angulairement par des portions de rayon (6, 7), l'angle α séparant le diamètre (D) du rayon du disque portant l'une des portions de rayon (6 ou 7) de la deuxième lumière, est inférieur à l'angle β séparant le diamètre (D) d'un rayon passant par l'intersection entre la ligne droite portant le segment (3) et l'arc de cercle (4) limitant la première lumière.

13. Disque selon l'une quelconque des revendications 1 à 12, caractérisé en ce que les lumières comportent des parties qui s'évasent (12, 13) en direction des faces des disques qui ne sont pas en contact.

14. Disque selon l'une quelconque des revendications 1 à 13, caractérisé en ce qu'il est réalisé en céramique.

15. Robinet à liquide du type "demi-tour", comportant deux disques superposés et en contact, admettant un débattement relatif en rotation pour régler le débit du liquide, chacun de ces disques étant selon l'une quelconque des revendications 1 à 14.

**Patentansprüche**

1. Scheibe für ein Zwei-Scheiben-Ventil mit halber Umdrehung, wobei die beiden Scheiben übereinander liegen und in Kontakt stehen, um den Durchsatz einer Flüssigkeit zu regeln, dadurch gekennzeichnet, daß sie eine erste und eine zweite Öffnung aufweist, wobei beide Öffnungen zu beiden Seiten eines vorherbestimmten Durchmessers (D) der Scheibe angeordnet sind, die erste Öffnung (1) im zentralen Teil der Scheibe liegt und die zweite Öffnung (2) am Scheibenumfang so angeordnet ist, daß bei geschlossener Stellung des Ventils die Öffnungen einer Scheibe nicht mit den Öffnungen der anderen Scheibe in Verbindung stehen und bei maximaler Öffnung des Ventils die ersten Öffnungem bzw. zweiten Öffnungen übereinander liegen.

2. Scheibe nach Anspruch 1, dadurch gekennzeichnet, daß die erste Öffnung (1) die Form eines Halbmondes hat.

3. Scheibe nach Anspruch 2, dadurch gekennzeichnet, daß die erste Öffnung einem Sektor von weniger als 180° eingeschrieben ist.

4. Scheibe nach irgendeinem der Ansprüche 1 bis 3, dadurch gekennzeichnet, daß die zweite Öffnung (2) die Form eines zur Scheibe konzentrischen Ringabschnittes hat.

5. Scheibe nach Anspruch 4, dadurch gekennzeichnet, daß der Ringabschnitt einem Sektor mit einem Winkel von etwas weniger als 180° eingeschrieben ist.

6. Scheibe nach irgendeinem der Ansprüche 1 bis 5, dadurch gekennzeichnet, daß, wenn die erste und die zweite Öffnung durch Kreisbögen (4, 5, 8) und/oder gerade Linien (3, 6, 7) begrenzt sind, an den Schnittpunkten der Kreisbögen und/oder der geraden Linien Verbindungsrundungen vorgesehen sind.

7. Scheibe nach Anspruch 6, dadurch gekennzeichnet, daß der Radius der Rundung der ersten Öffnung (1) kleiner ist als der Durchmesser des diese erste Öffnung begrenzenden Kreisbogens (4), dividiert durch 24.

8. Scheibe nach Anspruch 6 oder 7, dadurch gekennzeichnet, daß der Radius der Rundung der zweiten Öffnung kleiner ist als die Differenz der Durchmesser der die zweite Öffnung (2) begrenzenden Kreisbögen (5, 8), dividiert durch 24.

9. Scheibe nach irgendeinem der Ansprüche 1 bis 8, dadurch gekennzeichnet, daß, wenn die erste und die zweite Öffnung durch Kreisbögen und gerade Linien begrenzt sind, die zweite Öffnung (2) winkelmäßig durch Radiusabschnitte (6, 7) der Scheibe begrenzt ist, die nahe bei dem vorherbestimmten Durchmesser (D) liegen.

10. Scheibe nach irgendeinem der vorhergehenden Ansprüche, dadurch gekennzeichnet, daß das Verschließen zuerst durch das Fehlen einer Bedeckung der ersten Öffnung (1) und dann durch das Fehlen einer Bedeckung der zweiten Öffnung (2) bewirkt wird.

11. Scheibe nach Anspruch 9, dadurch gekennzeichnet, daß der Anfang oder das Ende der Überlagerung der zweiten Öffnungen (2) einen Durchgang für die Flüssigkeit bietet, dessen Form einem Trapez ähnlich ist.

12. Scheibe nach irgendeinem der Ansprüche 1 bis 11, dadurch gekennzeichnet, daß, wenn die erste Öffnung (1, 1') die Form eines Halbmondes hat, der durch ein nahe bei dem vorherbestimmten Durchmesser (D) liegendes Segment (3) und einen Kreisbogen (4) bestimmt wird, und die zweite Öffnung (2, 2') die Form eines zur Scheibe konzentrischen Ringabschnittes hat, der winkelmäßig durch Radiusabschnitte (6, 7) begrenzt wird, der Winkel alpha zwischen dem Durchmesser (D) und dem Radius der Scheibe, auf dem einer der Radiusabschnitte (6 oder 7) der zweiten Öffnung liegt, kleiner als der Winkel beta zwischen dem Durchmesser (D) und einem Radius ist, der durch den Schnittpunkt zwischen der geraden Linie, auf der das Segment (3) liegt, und dem die ersten Öffnung begrenzenden Kreisbogen (4) hindurchgeht.

13. Scheibe nach irgendeinem der Ansprüche 1 bis 12, dadurch gekennzeichnet, daß die Öffnungen Teile (12, 13) aufweisen, die sich in Richtung auf die Vorderseiten der Scheiben, die nicht in Kontakt stehen, ausweiten.

14. Scheibe nach irgendeinem der Ansprüche 1 bis 13, dadurch gekennzeichnet, daß sie aus Keramik hergestellt ist.

15. Flüssigkeitsventil mit halber Umdrehung, das zwei übereinanderliegende und in Kontakt stehende Scheiben umfaßt, die eine gegenseitige Verdrehung zur Regelung des Durchsatzes der Flüssigkeit erlauben, wobei jede der Scheiben gemäß irgendeinem der Ansprüche 1 bis 14 ausgebildet sind.

**Claims**

1. Disc for a two-disc tap of the half-turn type, the two discs being placed one on top of the other and in contact in order to adjust the flow of a liquid, characterised in that it has first and second openings, the two openings being situated on each side of a predetermined diameter (D) of the disc, the first opening (1) being situated in the central part of the disc and the second opening (2) being situated at the periphery of the disc so that in the closed position of the tap the openings in each disc are separated from the openings in the other disc and in the maximum open position of the tap the first and second openings are respectively superimposed.

2. Disc according to Claim 1, characterised in that the first opening (1) has the shape of a half-moon.

3. Disc according to Claim 2, characterised in that the first opening is inscribed within a sector of less than 180°.

4. Disc according to any one of Claims 1 to 3, characterised in that the second opening (2) is in the shape of a portion of an annulus concentric with the disc.

5. Disc according to Claim 4, characterised in that the said portion of an annulus is inscribed within a sector with an angle of slightly less than 180°.

6. Disc according to any one of Claims 1 to 5, characterised in that, the first and second openings being defined by arcs of a circle (4, 5, 8) and/or straight lines (3, 6, 7), connecting curves are provided at the intersections of these arcs of a circle and/or straight lines.

7. Disc according to Claim 6, characterised in that the radius of the curves of the first opening (1) is less than the diameter of the arc of a circle (4) defining this first opening divided by 24.

8. Disc according to Claim 6 or Claim 7, characterised in that the radius of the curves of the second opening (2) is less than the difference between the diameters of the arcs of a circle (5, 8) defining the second opening (2) divided by 24.

9. Disc according to any one of Claims 1 to 8, characterised in that, the first and second openings being defined by arcs of a circle and straight lines, the second opening (2) is delimited angularly by portions of radii (6, 7) of the disc close to the predetermined diameter (D).

10. Disc according to any one of the preceding claims, characterised in that closure is achieved first of all by the absence of any overlap of the first openings (1) and then by the absence of any overlap of the second openings (2).

11. Disc according to Claim 9, characterised in that the beginning or end of the superimposition of the second openings (2) offers a passage for the liquid with a shape similar to a trapezium.

12. Disc according to any one of Claims 1 to 11, characterised in that, the first opening (1, 1') having the shape of a half-moon defined by a segment (3) close to the predetermined diameter (D) and an arc of a circle (4), and the second opening (2, 2') having the shape of a portion of an annulus concentric with the disc delimited angularly by portions of a radius (6, 7), the angle $\alpha$ between the diameter (D) and the radius of the disc bearing one of the portions of a radius (6 or 7) of the second opening, is less than the angle $\beta$ between the diameter (D) and a radius passing through the intersection of the straight line carrying the segment (3) and the arc of a circle (4) delimiting the first opening.

13. Disc according to any one of Claims 1 to 12, characterised in that the openings include parts which widen out (12, 13) in the direction of the faces of the discs which are not in contact.

14. Disc according to any one of Claims 1 to 13, characterised in that it is made of ceramic.

15. Liquid tap of the "half-turn" type, having two discs placed one on top of the other and in contact, allowing a relative rotational movement in order to adjust the flow of liquid, each of these discs being in accordance with any one of Claims 1 to 14.

Fig.1

Fig.2

Fig.3

Fig.4

10